# EUROPEAN PATENT APPLICATION

(11) **EP 3 273 198 A1**
(43) Date of publication of application: **24.01.2018**
(21) Application number: 17181578.0
(22) Date of filing: 17.07.2017
(51) Int. Cl.: F28F 9/02, F16L 21/06, F16L 23/06, F16L 37/08, B60H 1/00

(54) **A CONNECTION OF REDUCED OVERALL DIMENSIONS BETWEEN AN ALUMINUM TUBE AND A HEAT EXCHANGER**

(30) Priority: 20.07.2016 IT 201600075962
(71) Applicant: DENSO THERMAL SYSTEMS S.p.A., 10046 Poirino (Torino) (IT)
(72) Inventor: PISTONE, Giovanni, I-10046 Poirino (Torino) (IT); BERGAMO, Luca, I-10046 Poirino (Torino) (IT); BENEDETTO, Roberto, I-10046 Poirino (Torino) (IT)
(74) Representative: Vanzini, Christian

(57) **Abstract**

A connection arrangement between an aluminum tube (10) and a heat exchanger (3), wherein the tube (10) has an outer diameter D and comprises an end flange (12) abutted against a connection flange (5) of the heat exchanger (3) and fastened thereto by means of a fastener (20). The tube (10) further comprises an elbow (14) arranged close to the end flange (12), and a rectilinear segment (16) extending from the end flange (12) to an end cross-section (14a) of the elbow (14). The elbow (14) has a bend radius R, referred to the central axis (z) of the tube (10), such that 0.5D ≤ R ≤ D and the end cross-section (14a) of the elbow (14) is arranged at a distance d from the connection flange (12) of the heat exchanger (3) such that d ≤ 0.5D. The fastener (20) consists of a tube clamp of plastic material encircling the connection flange (5) of the heat exchanger (3) and the end flange (12) of the tube (10). The tube clamp comprises a pair of clamp halves (21) snap-fitted to each other.

## Description

The present invention relates to a connection arrangement between an aluminum tube and a heat exchanger, comprising a heat exchanger provided with a connection flange within which a fluid flow duct is formed, and an aluminum tube having an outer diameter D and comprising an end flange abutted against the connection flange of the heat exchanger and fastened thereto by means of a fastener, the tube further comprising an elbow arranged close to the end flange, and a rectilinear segment extending from the end flange to an end cross-section of the elbow.

The aluminum tubes used for air conditioning systems are used to convey coolant and gas to the heat exchangers. The tubes consist of straight pieces joined by elbows whose bend radius is proportional to the diameter of the tube.

Standard configurations involve a considerable use of material resulting in high cost, a high fastening tolerance between tube and radiating mass and considerable overall dimensions.

One object of the present invention is to provide a connection arrangement between tube and heat exchanger that is better than the known configurations as regards the drawbacks mentioned above.

For this purpose, the object of the invention is a connection arrangement as defined above, wherein the elbow has a bend radius R, referred to the central axis of the tube such that 0.D ≤ R ≤ D and the end section of the elbow is arranged at a distance d from the connection flange of the heat exchanger such that d ≤ 0.5D, and
the fastener consists of a tube clamp of plastic material encircling the connection flange of the heat exchanger and the end flange of the tube, the tube clamp comprising a pair of clamp halves snap-fitted to each other.

In the arrangement according to the invention, a weight reduction is achieved due to the smaller amount of aluminum used in the tube elbow, in turn due to the reduction of the bend radius of the tube, compared to conventional configurations. Weight reduction is also due to the use of a plastic clamp for fastening the tube to the radiating mass, in place of the conventional metal clamp.

In addition, a reduction in the overall dimensions of the tube is obtained with respect to the prior art, due to the reduced bend radius and to the smaller distance between the Terminal end section of the elbow and the connection flange of the exchanger.

Moreover, a reduction of clearances in the application of the fastener is achieved, due to the reduced length of the straight part of the tube.

In any case, a constant inner section of tube can be ensured on the whole segment of the elbow with small radius by using cores during the bending process.

The use of a plastic clamp allows a homogeneous closure on the whole circumference between the tube and the radiating mass (360° closure); this aspect is improved compared to the use of a conventional metal clamp with screw closure, which has a geometry that does not follow the shape of the connected elements on the entire circumference (it has a contact surface with the elements to be joined by 310°).

Moreover, the use of a plastic clamp allows the mounting between tube and radiating mass through an automated process.

The use of a plastic clamp in place of a metal clamp also allows a cost reduction.

It should also be noted that the tight bend radius can make the fastening of the parts by a screw metal clamp problematic, as it prevents or hinders the closing of the clamp screw on the bending plane. This involves additional constraints in selecting the angular orientation of the metal clamp, and thus critical space constraints in zones where spaces should be reduced due to ergonomic reasons. These drawbacks are solved by the use of a plastic clamp that has an axial-symmetric footprint and that requires fitting equipment compatible with the overall dimensions.

An object of the invention is also a method for connecting an aluminum tube to a heat exchanger, comprising the steps of:
providing a heat exchanger provided with a connection flange within which a fluid flow duct is formed,
providing an aluminum tube having an outer diameter D and comprising an end flange, the tube further comprising an elbow arranged close to the end flange, and a rectilinear segment extending from the end flange to an end cross-section of the elbow,
abutting the end flange of the tube against the connection flange of the heat exchanger, and
fastening the end flange of the tube to the connection flange of the heat exchanger by means of a fastener,
   wherein
the elbow has a bend radius R, referred to the central axis of the tube, such that 0.5D ≤ R ≤ D and the end cross-section of the elbow is arranged at a distance d from the connection flange of the heat exchanger such that d ≤ 0.5D, and
the fastener consists of a tube clamp of plastic material comprising a pair of separate clamp halves snap-fittable to each other, the fastening step comprising
moving the clamp halves closer to each other and to the connection flange of the heat exchanger and the end flange of the tube, in a direction perpendicular to the rectilinear segment of the tube, until the clamp halves encircle the connection flange of the heat exchanger and the end flange of the tube and snap-fit to each other.

Further features and advantages of the arrangement according to the invention will become apparent from the following detailed description of an embodiment of the invention, made with reference to the accompanying drawings, provided for illustrative and non-limiting purposes only, in which
figure 1 shows a sectional view of a connection arrangement between a heat exchanger and an aluminum tube, taken in the bending plane of a tube elbow;
figure 2 shows a perspective view of the mounting of a tube clamp to the connection arrangement in figure 1; and
figure 3 shows a perspective view of the tube clamp fastened to the arrangement in figure 2.

The figures show a portion of a heat exchanger, indicated as a whole with reference numeral 3, and a connection flange 5 is also shown, which in the example shown is formed on a sleeve 6 welded to a manifold of the heat exchanger 3. Within the connection flange 5 a fluid flow duct is formed to allow the transfer of fluid from the tube to the heat exchanger if it is an inlet tube, and from the heat exchanger to the tube if it is an outlet tube.

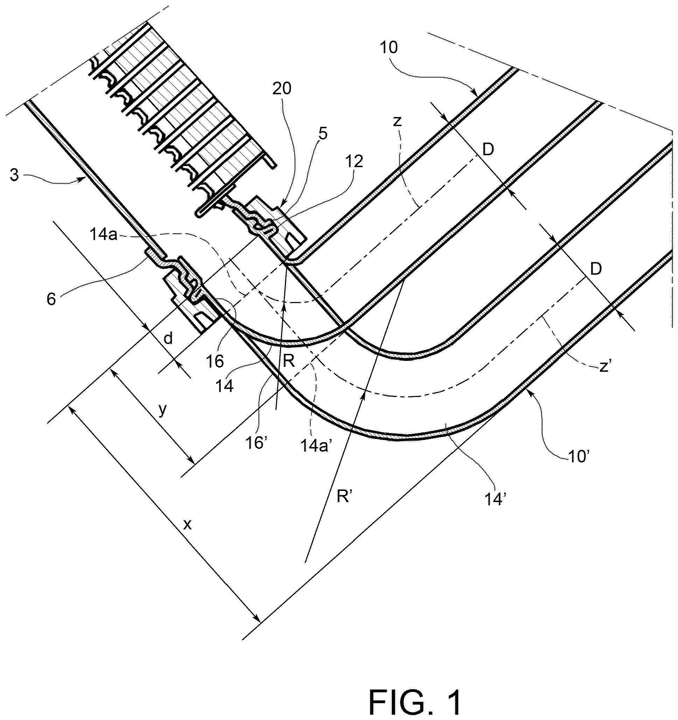

The arrangement shown also comprises an aluminum tube 10 having an outer diameter D and comprising an end flange 12 abutted against the connection flange 5 of the heat exchanger 3. Letter z indicates a central axis of tube 10. By way of geometrical comparison, figure 1 also shows an aluminum tube 10' of a conventional arrangement, having the same diameter D. Letter z' indicates a central axle of tube 10'.

The end flange 12 of tube 10 is fastened to the connection flange 5 of the heat exchanger 3 by means of a fastener 20 described hereinafter.

Tube 10 of the arrangement according to the invention comprises an elbow 14 arranged close to the end flange 12, and a rectilinear segment 16 extending from the end flange 12 to an end cross-section 14a of elbow 14.

Tube 10' of the conventional arrangement comprises an elbow 14' arranged close to the end flange 12, and a rectilinear segment 16' extending from the end flange 12 to an end cross-section 14a' of elbow 14'.

Elbow 14 of tube 10 of the arrangement according to the invention has a bend radius R, referred to the central axis z of tube 10, such that 0.5D ≤ R ≤ D and the end cross-section 14a of elbow 14 is arranged at a distance d from the connection flange 5 of the heat exchanger 3 such that d ≤ 0.5D.

Elbow 14' of tube 10' of the conventional arrangement has a bend radius R', referred to the central axis z' of tube 10', equal to 1.5D.

The overall dimensions determined by the arrangement according to the invention is indicated by length y, while the - significantly larger - overall dimensions determined by the conventional arrangement is indicated by length x.

The end flange 12 of tube 10 is fastened to the connection flange 5 of the heat exchanger 3 by means of a fastener 20, consisting of a tube clamp of plastic material encircling the connection flange 5 of the heat exchanger 3 and the end flange 12 of tube 10.

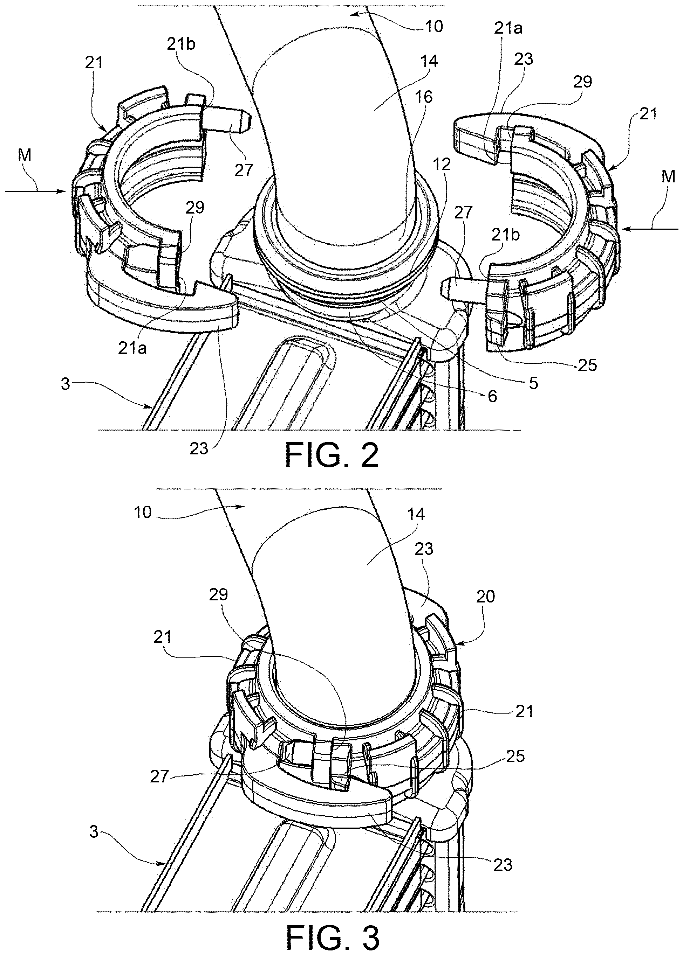

As is shown in figures 2 and 3, the tube clamp 20 comprises a pair of clamp halves 21 identical to each other, each having a C-shape and provided with end portions 21a, 21b that mate when the clamp halves 21 are in the closed position shown in figure 3. Each clamp half 21 on its radially inner surface has a groove (visible in particular in figure 1) adapted to enclose flanges 5 and 12 in the axial direction.

At or in the vicinity of the end portions 21 a of the clamp halves 21, snap-fitting elements are arranged. In particular, in the example shown the snap-fitting elements comprise, on one of the end portions, indicated with reference numeral 21a, of each clamp half 21, an elastic hook portion 23 protruding radially outwards and tangentially forward with respect to the respective end portion 21 a of the clamp half 21 and, on the other one of the end portions, indicated with reference numeral 21b, of each clamp half 21, an engagement tooth commitment 25 protruding radially outwards with respect to the respective end portion 21b of the clamp half 21. The engagement tooth 25 of an end portion 21b of a clamp half 21 is adapted to be engaged by the hook portion 23 of the end portion 21 a in front of the other clamp half 21 when the clamp halves 21 are in the closed position shown in figure 3.

In the example shown, the snap-fitting elements further comprise, on one of the end portions, indicated with reference numeral 21b, of each clamp half 21, a pin 27 protruding tangentially forward from the respective end portion 21b of the clamp half 21 and, on the other one of the end portions, indicated with reference numeral 21a, of each clamp half 21, a hole 29 formed in the respective end portion 21a of the clamp half 21. Pin 27 of an end portion 21b of a clamp half 21 is adapted to be fitted into hole 29 of the end portion 21 a in front of the other clamp half 21 when the clamp halves 21 are in the closed position shown in figure 3.

Pins 27 and holes 29 cooperate with the hook portions 23 and the engagement teeth 25 to make the clamp halves 21 integral with each other after reaching the closed position shown in figure 3.

Once the end flange 12 of tube 10 is abutted against the connection flange 5 of the heat exchanger 3, such flanges 5 and 12 are fastened to each other by the tube clamp 20 described above.

In order to make such fastening, the clamp halves 21 are moved close to each other and to the connection flange 5 of the heat exchanger 3 and to the end flange 12 of tube 10, perpendicular to the straight section 16 of tube 10, in the direction indicated by arrows M in figure 2. With this movement, the clamp halves 21 are made to encircle the connection flange 5 of the heat exchanger 3 and the end flange 12 of tube 10, snap-fitting the clamp halves to each other.

## Claims

1. A connection arrangement between an aluminum tube (10) and a heat exchanger (3), comprising a heat exchanger (3) provided with a connection flange (5) within which a fluid flow duct is formed, and an aluminum tube (10) having an outer diameter D and comprising an end flange (12) abutted against the connection flange (5) of the heat exchanger (3) and fastened thereto by means of a fastener (20), the tube (10) further comprising an elbow (14) arranged close to the end flange (12), and a rectilinear segment (16) extending from the end flange (12) to an end cross-section (14a) of the elbow (14),
**characterized in that**
the elbow (14) has a bend radius R, referred to the central axis (z) of the tube (10), such that 0.5D ≤ R ≤ D and the end cross-section (14a) of the elbow (14) is arranged at a distance d from the connection flange (12) of the heat exchanger (3) such that d ≤ 0.5D, and
the fastener (20) consists of a tube clamp of plastic material encircling the connection flange (5) of the heat exchanger (3) and the end flange (12) of the tube (10), the tube clamp comprising a pair of clamp halves (21) snap-fitted to each other.

2. A method for connecting an aluminum tube (10) to a heat exchanger (3), comprising the steps of:
providing a heat exchanger (3) provided with a connection flange (5) within which a fluid flow duct is formed,
providing an aluminum tube (10) having an outer diameter D and comprising an end flange (12), the tube (10) further comprising an elbow (14) arranged close to the end flange (12), and a rectilinear segment (16) extending from the end flange (12) to an end cross-section (14a) of the elbow (14),
abutting the end flange (12) of the tube (10) against the connection flange (5) of the heat exchanger (3), and
fastening the end flange (12) of the tube (10) to the connection flange (5) of the heat exchanger (3) by means of a fastener (20),
**characterized in that**
the elbow (14) has a bend radius R, referred to the central axis (z) of the tube (10), such that 0.5D ≤ R ≤ D and the end cross-section (14a) of the elbow (14) is arranged at a distance d from the connection flange (5) of the heat exchanger (3) such that d ≤ 0.5D, and
the fastener (20) consists of a tube clamp of plastic material comprising a pair of separate clamp halves (21) snap-fittable to each other, the fastening step comprising
moving the clamp halves (21) closer to each other and to the connection flange (5) of the heat exchanger (3) and the end flange (12) of the tube (10), in a direction perpendicular to the rectilinear segment (16) of the tube (10), until the clamp halves (21) encircle the connection flange (5) of the heat exchanger (3) and the end flange (12) of the tube (10) and snap-fit to each other.
